# EUROPÄISCHE PATENTSCHRIFT

(11) **EP 3 205 198 B1**
(45) Veröffentlichungstag und Bekanntmachung des Hinweises auf die Patenterteilung: **17.10.2018**
(21) Anmeldenummer: 17401011.6
(22) Anmeldetag: 09.02.2017
(51) Int. Cl.: A01C 15/00

(54) **ABDECKPLANENANORDNUNG FÜR EINEN VORRATSBEHÄLTER EINER LANDWIRTSCHAFTLICHEN VERTEILMASCHINE**
TARPAULIN ARRANGEMENT FOR A STORAGE TANK OF AN AGRICULTURAL DISTRIBUTION MACHINE
SYSTÈME DE BACHES POUR RÉCIPIENT DE STOCKAGE POUR UNE MACHINE DE DISTRIBUTION AGRICOLE

(30) Priorität: 11.02.2016 DE 102016102377
(43) Veröffentlichungstag der Anmeldung: 16.08.2017
(73) Patentinhaber: Amazonen-Werke H. Dreyer GmbH & Co. KG, 49205 Hasbergen (DE)
(72) Erfinder: Schiemenz, Friedhelm, 49205 Hasbergen (DE); Kleine-Hartlage, Hubertus, 49186 Bad Iburg (DE); Walter, Achim, 49078 Osnabrück (DE); Hofter, Rainer, 49143 Bissendorf (DE)

(56) Entgegenhaltungen:
- EP-A1- 1 149 524
- EP-A1- 2 688 388
- DE-A1- 19 820 301
- US-A- 3 627 376

## Beschreibung

Die Erfindung betrifft eine Abdeckplanenanordnung mit einem Vorratsbehälter einer landwirtschaftlichen Verteilmaschine gemäß des Oberbegriffes des Patentanspruches 1.

Eine derartige Abdeckplanenanordnung ist durch die EP 2 688 338 A1 bekannt.

Eine derartige Abdeckplanenanordnung ist in DE°198°20°301°A1 beschrieben. Die Abdeckplane wird über die Einfüllöffnung des Vorratsbehälters gelegt. Der Vorratsbehälter weist auf einem Steg eine Querstange auf, sodass die Abdeckplane satteldachartig die Einfüllöffnung bedeckt. Die Abdeckplane weist an zwei sich gegenüberliegenden Seiten Befestigungslaschen auf, durch welche eine am Vorratsbehälter befestigte Halteleine geführt wird, um die Abdeckplane am Vorratsbehälter zu befestigen. Die Laschen sind dabei auf einer etwa konvex verlaufenden Linie angeordnet, um im Zusammenwirken mit der Halteleine eine gleichmäßig stramme Befestigung der Abdeckplane zu bewirken. Diese Anordnung weist Vorzüge eines Satteldaches hinsichtlich des Abflusses von beispielsweise Regenwasser auf. Die Halteleine des Vorratsbehälters muss aber manuell durch die Befestigungslaschen der Abdeckplane geführt werden. Dazu muss der Fahrzeugführer die Kabine seiner Zugmaschine verlassen und eine beträchtliche Zeit aufwenden.

Der Erfindung liegt daher die Aufgabe zugrunde, eine Abdeckplanenanordnung mit einer hohen Festigkeit und Verrutschsicherheit sowie einfacher und schneller Befestigungsmöglichkeit zu schaffen.

Die Aufgabe wird erfindungsgemäß durch die kennzeichnenden Merkmale des Anspruches 1 gelöst.

Somit wird die Voraussetzung dafür geschaffen, dass eine dachförmig ausgestaltete Abdeckplane über die Einfüllöffnung eines Vorratsbehäl ters gelegt werden und diese so in einfacher Weise gestrafft und sicher befestigt werden kann.

Bei einer gezogenen oder mittels Dreipunktkupplungselementen an einer landwirtschaftlichen Zugmaschine angebauten landwirtschaftlichen Verteilmaschine, die mit einem Vorratsbehälter ausgestattet ist, ist es vorteilhaft, den Vorratsbehälter sicher und vor allem in kurzer Zeit vollständig abzudecken, damit Feuchtigkeit, beispielsweise in Form von Regen oder Nebel, nicht in das Behälterinnere eindringen kann.

Aus diesem Grund ist die Abdeckplane an ihrer einen Seite an einer Behälterkante, vorzugsweise auf der der Zugmaschine zugewandten Ankuppelseite, mittels geeigneter Befestigungsmittel, beispielsweise mit Schraubverbindungen, befestigt, und auf ihrer gegenüberliegenden Seite an einer ersten Stange. Diese erste Stange ist an einem Schwenkbügel befestigt und/oder Teil dieses Schwenkbügels. Der Schwenkbügel ist um eine etwa in der Behältermitte befindliche Gelenkachse verschwenkbar an der Behälterkante angelenkt. Die Abdeckplane ist somit zur wenigstens teilweisen Freigabe der Behälteröffnung wegschwenkbar.

Die Abdeckplane ist auf der Ankuppelseite der Maschine auf ganzer Länge fest mit der Behälterkante verbunden und auf der der Ankuppelseite gegenüber liegenden Seite mit der wegschwenkbaren ersten Stange. Auf den Stirnseiten des Behälters liegt die Abdeckplane lediglich an den Behälterkanten an. Um die Straffheit der Abdeckplane an den Behälterstirnseiten zu erhöhen, sind die beiden erfindungsgemäß bogenförmig zugeschnittenen, sich gegenüberliegenden Seiten der Abdeckplane an den Stirnseiten des Vorratsbehälters angeordnet.

Wird eine Abdeckplane lediglich über die Einfüllöffnung eines Vorratsbehälters gelegt, bildet sich auch bei straffster Befestigung der Abdeckplane in der Mitte der Einfüllöffnung durch den Durchhang der Abdeckplane eine Senke, in der sich Niederschlagswasser sammelt. Dies wird durch eine satteldachförmige Ausgestaltung der Abdeckplanenanordnung verhindert. Dazu ist an der Abdeckplane wenigstens eine zweite Stange zwischen der Befestigung der Abdeckplane am Vorratsbehälter und der ersten Stange und beabstandet zu dieser ersten Stange befestigt. Diese zweite Stange verläuft parallel zu der ersten Stange und zu der Behälterkante, an der die Abdeckplane befestigt ist, und ist in der den Behälter abdeckenden Position der Abdeckplane höher gelegen, als die erste Stange und die Behälterkante, an der die Abdeckplane befestigt ist.

Bei einer satteldachförmigen Ausgestaltung einer Abdeckplane ergeben sich auf den Behälterstirnseiten Giebelflächen. Diese Giebelflächen werden von dreieckförmigen Stirnflächen der Abdeckplane verschlossen. Die unteren Kanten dieser dreieckförmigen Stirnflächen erfindungsgemäß bogenförmig zugeschnitten.

Um ein vollständiges Verschließen der Behälteröffnung sicherzustellen, muss gewährleistet sein, dass die unteren Kanten der sich gegenüber liegenden, erfindungsgemäß zugeschnittenen Seiten der Abdeckplane dicht an den Behälterkanten anliegen. Zu diesem Zweck sind die unteren Kanten der sich gegenüberliegenden, erfindungsgemäß zugeschnittenen Seiten der Abdeckplane, insbesondere dreieckförmigen Stirnflächen schlaufenartig ausgebildet.

Bei einer satteldachförmigen Abdeckplanenanordnung sind insbesondere die unteren Kanten der dreieckförmigen Stirnflächen erfindungsgemäß zugeschnitten und daher schlaufenförmig ausgebildet.

In die schlaufenförmigen Bereiche der sich gegenüber liegenden, erfindungsgemäß bogenförmig zugeschnittenen Seiten der Abdeckplane, insbesondere der dreieckförmigen Stirnflächen, wird ein biegeelelastisches Element vorgespannt zwischen beiden Kantenenden eingebracht. Die Krümmung dieses biegeelastischen Elements folgt dem erfindungsgemäßen Zuschnitt der Abdeckplane, sodass der Scheitelpunkt des Bogens höher liegt, als beide Kantenenden.

Aufgrund seiner Elastizität strebt das eingebrachte Element eine nicht gespannte, gerade Form an. Durch die Fixierung seiner beiden Enden folgt daraus über die gesamte Länge des biegeelastischen Elements eine Zugkraftkomponente lotrecht zur Verbindungslinie der Kantenenden, die in seiner Mitte maximal wird. Somit werden die dreieckförmigen Stirnflächen der Abdeckplane über ihre gesamte Breite gestrafft, insbesondere in ihrer am weitesten von den fixierten Kantenenden entfernten Mitte.

Die erfindungsgemäße Bogenform trägt insbesondere im Zusammenwirken mit biegeelastischen Elementen signifikant zu einem straffen und gegen Verrutschen gesicherten Sitz einer Abdeckplanenanordnung auf einer Behälteröffnung bei. Der sichere Sitz der Plane wird mit einer deutlich reduzierten Anzahl an Fixpunkten erreicht, an welchen zudem der Fahrzeugführer die Abdeckplane nicht notwendigerweise manuell fixieren muss.

Zugleich verdecken die erfindungsgemäß zugeschnittenen unteren Kanten der Abdeckplane die Behälterkanten, insbesondere an den Stirnseiten, weniger, als herkömmlich zugeschnittene Abdeckplanen. Bei einer Satteldachkonstruktion ist ein Steg und/oder Schwenkbügel, der die zweite Stange trägt, an diesen Behälterkanten angelenkt. Somit steht bei Verwendung einer erfindungsgemäß zugeschnittenen Abdeckplane mehr Raum zur Befestigung eines solchen Stegs und/oder Schwenkbügels zur Verfügung. Dadurch wird eine Berührung von Abdeckplane sowie Schwenkbügelbefestigung und/oder Stegbefestigung vermieden. Wind- oder Betriebsbedingte Vibrationen der Abdeckplane führen auf diese Weise nicht zu einem Aufscheuern der unteren Planenkante.

Weitere Einzelheiten der Erfindung sind der Beispielsbeschreibung und den Zeichnungen zu entnehmen. Die Zeichnungen zeigen
- Fig.1: eine landwirtschaftliche Verteilmaschine mit einer satteldachförmigen Abdeckplanenanordnung mit bogenförmig zugeschnittenen unteren Kanten der dreieckförmigen Stirnflächen in perspektivischer Darstellung von schräg hinten,
- Fig.2: eine aus Fig.1 vergrößerte Darstellung der bogenförmig zugeschnittenen unteren Kante einer dreieckförmigen Stirnfläche der Abdeckplane in perspektivischer Darstellung von schräg hinten,
- Fig.3: den oberen Teil des Vorratsbehälters einer mit einer satteldachförmigen Abdeckplane abgedeckten landwirtschaftlichen Verteilmaschine in seitlicher Ansicht,
- Fig.4: den oberen Teil des Vorratsbehälters aus Fig.3 mit der Prinzipdarstellung des Einbringens eines biegeelastischen Elements und
- Fig.5: den oberen Teil des Vorratsbehälters einer landwirtschaftlichen Verteilmaschine mit herkömmlich zugeschnittenen unteren Kanten der dreieckförmigen Stirnflächen in seitlicher Ansicht.

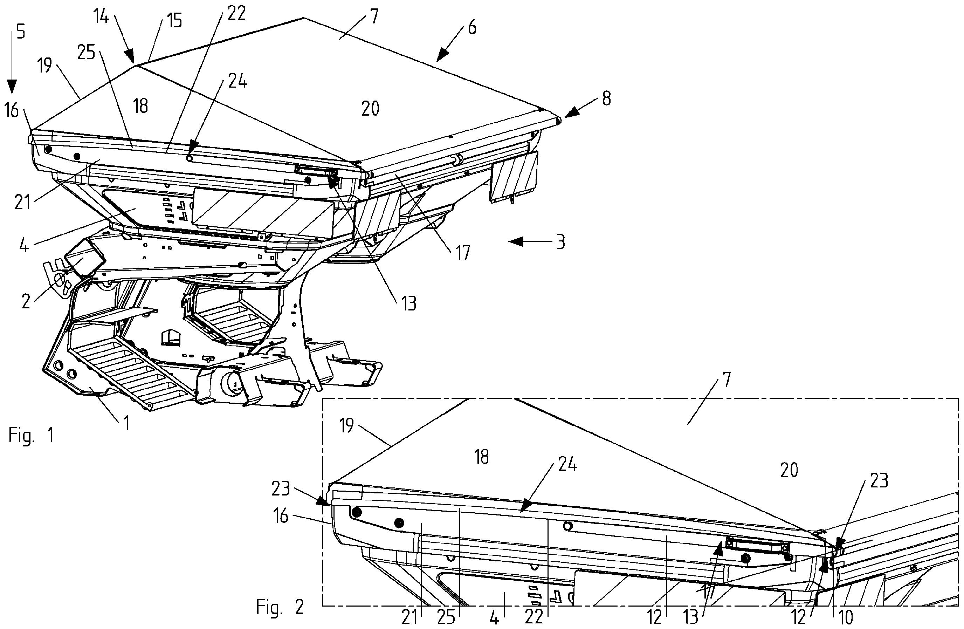

An einen Dreipunktkraftheber einer landwirtschaftlichen Zugmaschine, beispielsweise eines Ackerschleppers, wird über nur teilweise dargestellte Dreipunktkupplungselemente 1 der Rahmen 2 einer landwirtschaftlichen Verteilmaschine 3 an die Zugmaschine angekuppelt. Die landwirtschaftliche Verteilmaschine 3 ist im gewählten Ausführungsbeispiel in Fig. 1 bis Fig. 5 als Zentrifugaldüngerstreuer ausgebildet. Dieser Zentrifugaldüngerstreuer weist einen Vorratsbehälter 4 auf, der auf dem Rahmen 2 angeordnet ist. Auf der der Zugmaschine zugewandten Seite, Ankuppelseite 5, sind nur teilweise dargestellte Dreipunktkupplungselemente 1 zum Ankuppeln des Rahmens 2 an eine Kupplungsvorrichtung einer landwirtschaftlichen Zugmaschine, beispielsweise eines Ackerschleppers, angeordnet. Der Vorratsbehälter weist eine abgedeckt dargestellte Einfüllöffnung 6 auf, die sich im dargestellten Ausführungsbeispiel zumindest annähernd über den gesamten oberen Querschnitt des Vorratsbehälters 4 erstreckt.

Die Einfüllöffnung 6 des Vorratsbehälters 4 ist mittels einer Abdeckplane 7 abgedeckt. Die Abdeckplane 7 ist auf der Ankuppelseite 5 mittels geeigneter Befestigungsmittel, beispielsweise Schraubverbindung, im Bereich der Einfüllöffnung 6 am Vorratsbehälter 4 befestigt. Das gegenüberliegende Ende 8 der Abdeckplane 7 ist schlaufenartig ausgebildet. Durch den schlaufenartigen Bereich 9 wird eine erste Stange 10 gesteckt. Die äußeren Enden 11 dieser ersten Stange 10 sind jeweils mit Schwenkstangen 12 verbunden. Die erste Stange 10 bildet gemeinsam mit den Schwenkstangen 12 einen Schwenkbügel 13. Im ankuppelseitigen Bereich weist die Abdeckplane 7 einen weiteren schlaufenartigen Bereich 14 auf, durch den eine zweite Stange 15 geführt ist. Diese zweite Stange 15 verläuft parallel zu der ersten Stange 10 und der Behälterkante 16, an der die Abdeckplane 7 befestigt ist, und ist im dargestellten Beispiel kürzer als die erste Stange 10 und als die Behälterkante 16 ausgebildet. Die zweite Stange 15 ist an weiteren, nicht dargestellten Schwenkstangen befestigt, mit welchen sie einen zweiten Schwenkbügel bildet.

Der Schwenkbügel 13 und der zweite, nicht dargestellte Schwenkbügel sind schwenkbar am oberen Bereich des Vorratsbehälters 4 befestigt und weisen Schwenkachsen auf, die parallel zu den Stangen 10 und 15 verlaufen.

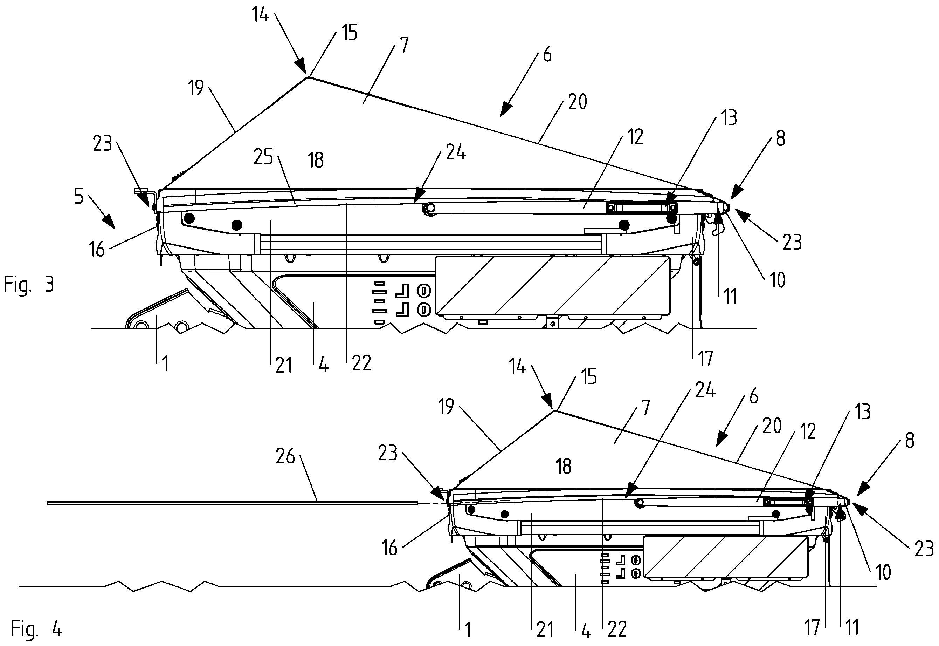

Im dargestellten Beispiel ist die zweite Stange 15 näher an der Behälterkante 16 angeordnet, an der die Abdeckplane 7 befestigt ist, als an der gegenüberliegenden Behälterkante 17 bzw. der ersten Stange 10, wie insbesondere Fig. 3 zeigt. Dadurch ist die satteldachförmige Abdeckplanenanordnung asymmetrisch und die dreieckförmigen Stirnflächen 18 sind nicht als gleichschenklige Dreiecke ausgebildet. Der Anstellwinkel gegenüber der Waagerechten der ankuppelseitigen Dachfläche 19 ist größer als der der rückwärtigen Dachfläche 20 und beträgt im dargestellten Beispiel 38°. Die Waagerechte wird im dargestellten Beispiel durch die Ebene festgelegt, die die Behälterkanten 16 und 17 sowie die stirnseitigen Kanten 21 aufspannen.

Die untere Kante 22 der dreieckförmigen Stirnflächen 18 ist nur an ihren beiden Enden 23 fixiert, nämlich auf der Ankuppelseite 5 sind sie durch beispielsweise Schraubverbindungen an der Behälterkante 16 und auf der der Ankuppelseite 5 gegenüberliegenden Seite 8 an einer durch den schlaufenartgien Bereich 9 geführten ersten Stange 10 befestigt. Zwischen den beiden derart fixierten Enden 23 weist die untere Kante 22 der dreieckförmigen Stirnflächen 18 einen bogenförmigen Zuschnitt 24 und entsprechenden Verlauf auf, sodass der Scheitelpunkt dieses Bogens 24, wie insbesondere in Fig. 2 gezeigt, höher gelegen ist als die beiden fixierten Enden 23. Die untere Kante 22 ist zudem schlaufenartig ausgebildet. In diesem schlaufenartigen Bereich 25 wird ein biegeelastisches Element 26 eingebracht und zwischen den beiden Kantenenden 23 fixiert. Das biegeelastische Element 26 folgt aufgrund seiner fixierten Enden der Führung im schlaufenförmigen Bereich 25 der unteren Kanten 22 der dreieckförmigen Stirnflächen 18 der Form des Bogens 24. Das biegeelastische Element 26 ist somit vorgespannt und wird unter dieser Spannung gehalten. Seine Spannung bewirkt ein Bestreben des biegeelastischen Elements 26, in eine gerade, gestreckte Ausrichtung zu gelangen, wodurch das biegeelastische Element 26 in seiner dem Bogen 24 der unteren Planenkanten 22 folgenden Position über seine gesamte Länge eine Zugkraftkomponenten nach unten auf die untere Kante 22 der dreieckförmigen Stirnflächen 18 ausübt. Diese durch die Bogenform 24 des Zuschnitts bewirkte Zugkraftkomponente strafft die Abdeckplane 7 an den dreieckförmigen Stirnflächen 18.

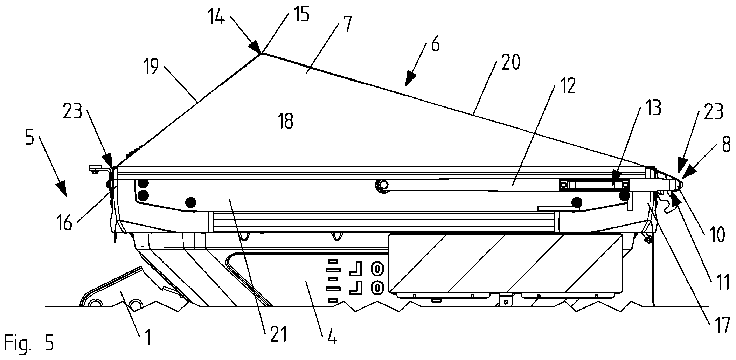

Die derart gestaltete Abdeckplanenanordnung verschließt den Vorratsbehälter 4 vollständig, wie es in Fig. 1 gezeigt ist. Die satteldachförmige Abdeckplanenanordnung begünstigt durch schräge Dachflächen 19 und 20 den Abfluss von beispielsweise Regenwasser. Die bogenförmige untere Kante 22 der dreieckförmigen Stirnflächen 18 ermöglicht eine berührungsfreie Anordnung von Abdeckplane 7 und Befestigung des nicht dargestellten, zweiten Schwenkbügels. Dies ist vorteilhaft gegenüber Abdeckplanen 7 mit herkömmlichem Zuschnitt, wie ihn Fig. 5 zeigt.

## Patentansprüche

1. Abdeckplanenanordnung mit einem Vorratsbehälter (4) einer landwirtschaftlichen Verteilmaschine (3), dessen obere Behälteröffnung, insbesondere Einfüllöffnung (6), mit einer Abdeckplane (7) abdeckbar ist, wobei die Abdeckplane (7) auf ihrer einen Seite (5) am Vorratsbehälter (7) mittels geeigneter Befestigungsmittel befestigt ist und auf ihrer gegenüberliegenden Seite (8) an einer ersten Stange (10) befestigt ist, wobei diese Stange (10) an einem um eine etwa in der Behältermitte befindliche Gelenkachse verschwenkbaren, an der Behälterkante (21) angelenkten Schwenkbügel (13) schwenkbar befestigt und/oder Teil des Schwenkbügels (13) ist, wobei die Abdeckplane (7) zur Freigabe der oberen Behälteröffnung (6) wegschwenkbar ist, wobei an der Abdeckplane (7) zumindest eine zweite Stange (15) zwischen der Befestigung der Abdeckplane (7) am Vorratsbehälter (4) und der ersten Stange (11) und beabstandet zu dieser angeordnet ist, dass die zweite Stange (15) parallel zu der ersten Stange (11) und der Behälterkante (16) verläuft, an der die Abdeckplane (7) befestigt ist, und dass die zweite Stange (15) in der den Vorratsbehälter (4) verschließenden Position der Abdeckplane (7) höher gelegen ist, als die erste Stange (11) und die Behälterkante (16), an der die Abdeckplane (7) befestigt ist, **dadurch gekennzeichnet, dass** die Abdeckplanenanordnung im geschlossenen Zustand dachförmig als Satteldach ausgestaltet ist, so dass die Giebelseiten der als Satteldach angeordneten Abdeckplane (7) von dreieckförmigen Stirnflächen (18) der Abdeckplane (7) verschlossen sind, und dass die unteren Kanten (22) der Abdeckplane (7) an zwei gegenüberliegenden Behälterseiten derart bogenförmig (24) zugeschnitten sind, dass der zwischen den Kantenenden (23) liegende Scheitelpunkt des Kantenverlaufs der Abdeckplane (7) höher liegt, als die beiden Kantenenden (23).

2. Abdeckplanenanordnung nach Anspruch 1, **dadurch gekennzeichnet, dass** die beiden sich gegenüberliegenden Behälterseiten die Stirnseiten (21) des Behälters (4) sind.

3. Abdeckplanenanordnung nach Anspruch 1, **dadurch gekennzeichnet, dass** die bogenförmig (24) zugeschnittenen unteren Kanten (22) zweier sich gegenüberliegender Seiten der Abdeckplane (7) schlaufenartig (25) ausgebildet sind.

4. Abdeckplanenanordnung nach Anspruch 2, **dadurch gekennzeichnet, dass** die bogenförmig (24) zugeschnittenen unteren Kanten (22) der dreieckförmigen Stirnflächen (18) der als Satteldach ausgebildeten Abdeckplane (7) schlaufenartig (25) ausgebildet sind.

5. Abdeckplanenanordnung nach Anspruch 3, **dadurch gekennzeichnet, dass** in die schlaufenartig (25) ausgestalteten unteren Kanten (22) zweier sich gegenüberliegender Seiten der Abdeckplane (7) ein biegeelastisches Element (26) vorgespannt zwischen den beiden Kantenenden (23) eingebracht wird.

6. Abdeckplanenanordnung nach Anspruch 4, **dadurch gekennzeichnet, dass** in die schlaufenartig (25) ausgestalteten unteren Kanten (22) der dreieckförmigen Stirnflächen (18) der als Satteldach ausgebildeten Abdeckplane (7) ein biegeelastisches Element (26) vorgespannt zwischen den beiden Kantenenden (23) eingebracht wird.

7. Abdeckplanenanordnung nach den vorangegangenen Ansprüchen 5 oder 6, **dadurch gekennzeichnet, dass** ein vorgespannt zwischen den Kantenenden (23) in die schlaufenartig (25) ausgestalteten unteren Kanten (22) der dreieckförmigen Stirnflächen (18) der Abdeckplane (7) eingebrachtes biegeelastisches Element (26) durch die Vorspannung auf seiner gesamten Länge eine Zugkraftkomponente nach unten bewirkt, wodurch die Stirnflächen (18) der Abdeckplane (7) gespannt werden und die Abdeckplane (7) gegen Verrutschen gesichert ist.

8. Abdeckplanenanordnung nach Anspruch bis 2, **dadurch gekennzeichnet, dass** die Bogenform (25) der unteren Kante (22) der Stirnflächen (18) der Abdeckplane (7) zwischen ihren Kantenenden (23) an der Behälterkante (21) Freiraum schafft, um den etwa mittig an der Behälterkante (21) angelenkten Schwenkbügel (13) zu positionieren.

## Claims

1. Tarpaulin arrangement with a storage tank (4) of an agricultural distribution machine (3), the upper tank opening of which storage tank, in particular filling opening (6), can be covered with a tarpaulin (7), wherein the tarpaulin (7) is fastened on its one side (5) to the storage tank (7) by means of suitable fastening means and is fastened on its opposite side (8) to a first rod (10), wherein said rod (10) is fastened pivotably to a pivot bow (13), which is pivotable about an axis of articulation located approximately in the centre of the tank and is coupled to the tank edge (21), and/or is part of the pivot bow (13), wherein the tarpaulin (7) can be pivoted away in order to open up the upper tank opening (6), wherein at least one second rod (15) is arranged on the tarpaulin (7) between the fastening of the tarpaulin (7) to the storage tank (4) and the first rod (11) and at a distance from the latter, in that the second rod (15) runs parallel to the first rod (11) and the tank edge (16), to which the tarpaulin (7) is fastened, and in that, in the position of the tarpaulin (7) closing the storage tank (4), the second rod (15) is positioned higher than the first rod (11) and the tank edge (16), to which the tarpaulin (7) is fastened, **characterized in that** the tarpaulin arrangement is configured in a roof-shaped manner in the form of a gable roof in the closed state such that the gable sides of the tarpaulin (7) arranged in the form of a gable roof are closed by triangular end surfaces (18) of the tarpaulin (7), and **in that** the lower edges (22) of the tarpaulin (7) on two opposite tanks sides are cut in an arched manner (24) such that the apex point of the edge profile of the tarpaulin (7) that lies between the edge ends (23) is located higher than the two edge ends (23).

2. Tarpaulin arrangement according to Claim 1, **characterized in that** the two opposite tank sides are the ends sides (21) of the tank (4).

3. Tarpaulin arrangement according to Claim 1, **characterized in that** the lower edges (22), which are cut in an arched manner (24), of two opposite sides of the tarpaulin (7) are designed in the manner of a loop (25) .

4. Tarpaulin arrangement according to Claim 2, **characterized in that** the lower edges (22), which are cut in an arched manner (24), of the triangular end surfaces (18) of the tarpaulin (7) designed in the form of a gable roof are designed in the manner of a loop (25) .

5. Tarpaulin arrangement according to Claim 3, **characterized in that** a flexurally elastic element (26) is introduced into the lower edges (22), which are configured in the manner of a loop, of two opposite sides of the tarpaulin (7) in a manner pretensioned between the two edge ends (23).

6. Tarpaulin arrangement according to Claim 4, **characterized in that** a flexurally elastic element (26) is introduced into the lower edges (22), which are configured in the manner of a loop (25), of the triangular end surfaces (18) of the tarpaulin (7) which is designed in the form of a gable roof in a manner pretensioned between the two edge ends (23).

7. Tarpaulin arrangement according to either of the preceding Claims 5 and 6, **characterized in that** a flexurally elastic element (26) introduced into the lower edges (22), which are configured in the manner of a loop (25), of the triangular end surfaces (18) of the tarpaulin (7) in a manner pretensioned between the edge ends (23) brings about a tensile force component downwards by means of the pretensioning over its entire length, as a result of which the end surfaces (18) of the tarpaulin (7) are tensioned and the tarpaulin (7) is secured against slipping.

8. Tarpaulin arrangement according to Claim 2, **characterized in that** the arch shape (25) of the lower edge (22) of the end surfaces (18) of the tarpaulin (7) creates a clearance between the edge ends (23) thereof on the tank edge (21) in order to position the pivot bow (13), which is coupled approximately centrally to the tank edge (21).

## Revendications

1. Dispositif à bâche couvrante comprenant un réservoir (4) d'une machine de distribution agricole (3), réservoir dont l'ouverture supérieure, notamment l'ouverture de remplissage (6), peut être recouverte d'une bâche couvrante (7), la bâche couvrante (7) étant fixée sur un de ses côtés (5) au réservoir (7) à l'aide de moyens de fixation appropriés et étant fixée sur son côté opposé (8) à une première barre (10), cette barre (10) étant fixée de manière pivotante à un étrier pivotant (13), relié de manière articulée au bord (21) du réservoir et pouvant pivoter sur l'axe d'articulation situé à peu près au centre du réservoir, et/ou faisant partie de l'étrier pivotant (13), la bâche couvrante (7) pouvant être écartée par pivotement pour libérer l'ouverture supérieure (6) du réservoir, au moins une deuxième barre (15) étant disposée au niveau de la bâche couvrante (7) entre la fixation de la bâche couvrante (7) au réservoir (4) et la première barre (11) en étant espacée de celle-ci, en ce que la deuxième barre (15) s'étend parallèlement à la première barre (11) et au bord (16) du réservoir auquel la bâche couvrante (7) est fixée, et en ce que la deuxième barre (15) est située, dans la position de la bâche couvrante (7) fermant le réservoir (4), plus haut que la première barre (11) et le bord (16) du réservoir auquel la bâche couvrante (7) est fixée, **caractérisé en ce que** le dispositif à bâche couvrante est conçu, à l'état fermé, en forme de toit tel qu'un toit en bâtière de sorte que les côtés formant pignon de la bâche couvrante (7) disposée en forme de toit en bâtière sont fermés par des faces d'extrémité triangulaires (18) de la bâche couvrante (7) et **en ce que** les bords inférieurs (22) de la bâche couvrante (7) sont découpés en forme d'arc au niveau de deux côtés opposés (24) du réservoir de telle sorte que le sommet, situé entre les extrémités de bord (23), du profil de bord de la bâche couvrante (7) est plus haut que les deux extrémités de bord (23).

2. Dispositif à bâche couvrante selon la revendication 1, **caractérisé en ce que** les deux côtés opposés du réservoir sont les côtés d'extrémité (21) du réservoir (4).

3. Dispositif à bâche couvrante selon la revendication 1, **caractérisé en ce que** les bords inférieurs (22), découpés en forme d'arc (24), de deux côtés opposés de la bâche couvrante (7) sont conçus à la manière d'une boucle (25).

4. Dispositif à bâche couvrante selon la revendication 2, **caractérisé en ce que** les bords inférieurs (22), découpés en forme d'arc (24), des faces d'extrémité triangulaires (18) de la bâche couvrante (7), conçue en forme de toit en bâtière, sont conçus à la manière d'une boucle (25).

5. Dispositif à bâche couvrante selon la revendication 3, **caractérisé en ce qu'**un élément (26) élastique en flexion est introduit, en étant précontraint entre les deux extrémités de bord (23), dans les bords inférieurs (22), ayant la forme d'une boucle (25), de deux côtés opposés de la bâche couvrante (7).

6. Dispositif à bâche couvrante selon la revendication 4, **caractérisé en ce qu'**un élément (26) élastique en flexion est introduit, en étant précontraint entre les deux extrémités de bord (23), dans les bords inférieurs (22), ayant la forme d'une boucle (25), des faces d'extrémité triangulaires (18) de la bâche couvrante (7), conçue en forme de toit en bâtière.

7. Dispositif à bâche couvrante selon l'une des revendications précédentes 5 ou 6, **caractérisé en ce qu'**un élément (26) élastique en flexion introduit, en étant précontraint entre les extrémités de bord (23), dans les bords inférieurs (22), ayant la forme d'une boucle (25), des faces d'extrémité triangulaires (18) de la bâche couvrante (7) génère, en raison de la précontrainte exercée sur toute sa longueur, une composante de force de traction dirigée vers le bas de sorte que les faces d'extrémité (18) de la bâche couvrante (7) sont tendues et la bâche couvrante (7) est empêchée de glisser.

8. Dispositif à bâche couvrante selon la revendication 2, **caractérisé en ce que** la forme d'arc (25) du bord inférieur (22) des faces d'extrémité (18) de la bâche couvrante (7) crée un espace libre entre ses extrémités de bord (23) au niveau du bord (21) du réservoir pour positionner l'étrier pivotant (13) relié de manière articulée à peu près au centre au bord (21) du réservoir.
